# EUROPEAN PATENT SPECIFICATION

(11) **EP 3 426 600 B1**
(45) Date of publication and mention of the grant of the patent: **25.12.2019**
(21) Application number: 17708274.0
(22) Date of filing: 03.03.2017
(51) Int. Cl.: C01B 25/234, C25D 5/56, C23C 18/16, C23C 18/18, C23C 18/20, C23C 18/24, C23C 18/54, H05K 3/18, C23F 1/46, C23C 18/22

(54) **METHOD FOR RECOVERING PHOSPHORIC ACID FROM A SPENT PHOSPHORIC ACID / ALKALI METAL PERMANGANATE SALT ETCHING SOLUTION**
VERFAHREN ZUR RÜCKGEWINNUNG VON PHOSPHORSÄURE AUS EINER VERBRAUCHTEN PHOSPHORSÄURE-/ALKALIMETALLSALZPERMANGANATÄTZLÖSUNG
PROCÉDÉ POUR RÉCUPÉRER DE L'ACIDE PHOSPHORIQUE À PARTIR D'UNE SOLUTION DE GRAVURE ACIDE PHOSPHORIQUE / SEL DE PERMANGANATE DE MÉTAL ALCALIN USAGÉE

(30) Priority: 08.03.2016 EP 16305263
(43) Date of publication of application: 16.01.2019
(73) Proprietor: Atotech Deutschland GmbH, 10553 Berlin (DE)
(72) Inventor: BROUZES, Alexandre, 10553 Berlin (DE); LAURENT, Matthieu, 10553 Berlin (DE)
(86) International application number: PCT/EP2017/055086
(87) International publication number: WO 2017/153298

(56) References cited:
- US-A- 3 506 397
- US-A- 3 598 630
- US-A- 4 054 693
- US-A1- 2005 199 587
- US-A1- 2011 256 413

## Description

This invention pertains to a method for recovering phosphoric acid from a spent phosphoric acid / alkali metal permanganate salt etching solution containing at least one manganese oxide.

It is also directed to a process for metallizing a non-conductive substrate, comprising an oxidation step with a phosphoric acid / alkali metal permanganate salt etching solution, in which said etching solution is treated according to the above method.

### BACKGROUND OF THE INVENTION

Plastic surfaces are frequently coated with suitable metal layers either for technical reasons or for decorative purposes. For instance, electrically conducting structures may be formed on the surface of a plastic substrate with a view to manufacturing integrated circuits, or a metallized surface may be created on automobile parts, cosmetic containers or spectacles, so as to improve their appearance. Although there are several techniques for depositing a metal layer onto a plastic surface, the coating processes always include a first step of etching the surface in order to increase its roughness or even create holes therein so as to provide an anchoring effect and thus to ensure sufficient adhering strength of the deposited metal layers. This etching step has long used chromium VI etching solutions, which have been replaced by other oxidizing solutions that are less detrimental to the environment and less harmful to human health (see for instance US 2004/096584). These alternative etching solutions, such as acidic solutions of alkali permanganates disclosed in WO 2011/132144 in the name of the Applicant, both increase the surface roughness of the substrate and create oxygen functions thereon. In these solutions, up to 20 g/l of the alkali permanganate are typically mixed with a 40 to 85% phosphoric acid solution and optionally with additives such as wetting agents and defoamers, and the resulting solution is heated to a temperature between 30 and 90°C before dipping the plastic substrate therein.

A drawback of such etching solutions is that the permanganic species is not the most stable form of manganese, since it tends to form various manganese oxides including manganese dioxide. The etching bath thus becomes depleted in permanganate ions which should be replenished until the bath becomes so viscous that it has to be changed. The formation of manganese dioxide not only reduces the pickling effect of the etching solution, but also results in a colloid with phosphoric acid. This colloid makes it difficult to recover phosphoric acid by filtering or centrifuging for further use, as would be required for further improving the environmental impact of the metallization process. Moreover, the deposition of this colloid on the plastic substrate may detrimentally affect its homogeneous metallization.

In order to prevent the formation of manganese dioxide, it has been suggested in US 2011/0140035 to substitute the alkali permanganate with Mn(VII) ions obtained by means of anodic oxidation from a solution containing Mn²⁺ ions such as a solution of MnSO4. This oxidation step however impacts the cost of the metallization process.

As an alternative, it has been proposed in WO 2013/135864 to lower the phosphoric acid concentration in the etching bath to a value between 0.02 and 0.6 mol/l and maintain a high permanganate concentration. The drawback of this solution is that the etching step is not as effective as needed, which requires conducting a preliminary step of treating the plastic substrate with an aqueous solution of a glycol compound in order to increase the adhesion strength between the plastic substrate and the metal layer deposited thereon. In addition, the formation of manganese dioxide is not completely prevented, which requires adding to the process a further step of reacting manganese dioxide with a reducing agent such as an acidic solution of hydrogen peroxide. These two additional steps clearly impact the cost of this process.

US-3,506,397 specifically deals with the problem of separating phosphoric acid from a complex mixture formed with potassium permanganate and other manganese species. This process involves adding oxalic acid to the spent etching solution so as to precipitate solid matter which is then filtered in order to recover phosphoric acid. Besides the cost of oxalic acid, the drawback of this process is that the concentration of oxalic acid must be precisely adjusted so as to prevent it from polluting the phosphoric acid solution that is recovered. Moreover, the precipitate formed is difficult to filtrate due to the viscosity of the composition. Finally, the reduction of the manganese species by oxalic acid results in the formation of carbon dioxide which is not environmentally friendly.

US 2005/199587 A1 and US 2011/256413 A1 disclose both a process for metallizing a non-conductive substrate.

### SUMMARY

In view of the above, there remains the need to provide a cheap alternative for recovering phosphoric acid from an etching solution containing an alkali metal permanganate salt.

The inventors have now found that the colloidal manganese oxides formed within the etching solution could be coalesced by heating the solution at a temperature between 100 and 200°C, which then allows their separation from phosphoric acid by centrifugation. Phosphoric acid may thus be recovered easily and in concentrated form. It may then be re-used for the preparation of a fresh etching solution, which is both advantageous from the viewpoint of the economics of the process and from an environmental perspective. Moreover, the process of this invention does not make use of any chemical entity that could contaminate phosphoric acid.

This invention is thus directed to a method for recovering phosphoric acid from a spent phosphoric acid / alkali metal permanganate salt etching solution containing at least one manganese oxide, characterized in that said process comprises the following successive steps:
(a) heating the etching solution to a temperature between 90°C and 200°C so as to coalesce said at least one manganese oxide,
(b) cooling down the resulting suspension,
(c) centrifuging the cooled suspension so as to separate a liquid phase from a solid phase, and
(d) recovering said liquid phase which contains phosphoric acid.

It also pertains to a process for metallizing a non-conductive substrate, comprising the successive steps of:
- oxidation of said substrate with an etching solution comprising phosphoric acid and an alkali metal permanganate salt,
- activation of said oxidized substrate by contacting it with a basic aqueous solution of at least one metal salt, so as to provide metal ions onto said substrate,
- reduction of said metal ions into metal element particles, and
- electroless plating and/or electrolytic deposition of metal,
characterized in that said etching solution is treated according to the method as mentioned above. With other words in that said etching solution said phosphoric acid is re-used and was recovered by the method as mentioned above.

Oxidation of said substrate therein means treating said substrate so as to provide an oxidized substrate and a spent etching solution.

It also pertains to an use of an apparatus comprising at least a dish, a heater device, a cooler device, a centrifuge for recovering phosphoric acid according to the method as mentioned above and providing the recovered phosphoric acid for the process as mentioned above.

### DETAILED DESCRIPTION

The method as described herein aims at recovering phosphoric acid from a spent phosphoric acid / alkali metal permanganate salt etching solution containing at least one manganese oxide. This etching solution has been prepared by mixing phosphoric acid with an alkali metal permanganate salt and used in the etching step of a metallization process intended to provide a metal layer onto a non-conducting substrate such as a polymer (or plastic) substrate. In such a process, the purpose of the etching solution is, as explained above, to treat the surface in order to create holes into the surface of the substrate or to increase the roughness thereof and optionally to create oxygen functions onto the substrate, such as chelating functions, especially carboxyl functions.

In the preparation of this etching solution, the alkali metal permanganate salt may be sodium permanganate or potassium permanganate, preferably sodium permanganate. It may be mixed in an amount of from 1 g/l to 25 g/l, and preferably from 5 to 10 g/l, with phosphoric acid in an amount of from 5 to 20 mol/1, preferably from 8 to 14 mol/1, relative to the total volume of the etching solution. Phosphoric acid is typically used as a 40-90% solution in water, preferably as a 85% solution. The amount of phosphoric acid in the etching solution typically ranges from 50 to 70%. The pH of the etching solution is usually less than 2, preferably less than 1.

The etching solution preferably does not comprise any other solvent than water. It may further comprise sulfuric acid in an amount of from 1:50 to 1:2 (w/w), and preferably from 1:10 to 1:5 (w/w), relative to phosphoric acid. In addition or alternatively, the etching solution may include at least one additive selected from the group consisting of: a wetting agent, an antifoaming agent, and mixtures thereof. Examples of wetting agents are fluorocarbons, especially perfluorinated compounds, which may be used in a concentration between about 0.0001 M and about 1.0 M, preferably between about 0.001 M and about 0.5 M, and more preferably between about 0.01 M and about 0.1 M.

The etching solution is used for etching a non-conductive substrate immersed in said solution. Suitable substrates comprise polymers, wood, glass and cardboard, for instance. The etching solution used in this invention preferably applies to polymer substrates and more specifically to substrates consisting of or coated with a polymer layer comprising at least one thermoplastic and/or elastomeric polymer and optionally one or more organic and/or inorganic fillers such as silica, glass fibers, aramid fibers, carbon nanotubes, carbon black and carbon fibers. Examples of polymers include polyolefins such as polypropylene and polyethylene; acrylonitrile-butanediene-styrene resins (ABS); polyamides; polycarbonates; polyesters such as poly(methyl methacrylate), poly(ethylene terephthalate) and poly(butylene terephthalate); polyetherimides; polyvinylidene fluoride; poly(oxymethylene); polyetheretherketones; polystyrene; poly(phenylene sulfide); and their mixtures.

Etching may be performed at a temperature between 15 and 70°C, preferably between 15 and 45°C and still preferably between 20 and 40°C, and usually takes place over a time period of between 1 minute to 60 minutes, preferably from 5 minutes to 30 minutes. The plastic substrate may be immersed into the etching solution, which can be otherwise sprayed or applied onto the substrate in any suitable way.

Thus, the etching solution has usually been maintained at a temperature between 15 and 70°C before conducting the recovery process of this invention. This has resulted in the formation of one or more manganese oxides, especially manganese dioxide, in the etching solution. These oxides form colloids that are difficult to separate from phosphoric acid. For this purpose, the etching solution is heated, according to this invention, to a temperature between 90 and 200°C, preferably from 110 to 160°C, still preferably from 130 to 150°C. The spent etching solution may be maintained at this temperature for 10 to 120 minutes, for instance for 20 to 100 minutes and preferably from 40 to 80 minutes. This heating step may be performed by means of a heating plate, a heater stick, a heat-transfer fluid, a gas source, a microwave heater or an infra-red heater, for instance.

During this heating step, manganese oxides coalesce, and the plastic residues resulting from substrate etching also settle, when present, such that a suspension is obtained. After cooling the resulting suspension to a temperature of from 20 to 60°C, preferably from 30 to 50°C, for instance, this suspension may be decanted or not, before it is subjected to one or more centrifugation step(s) in order to separate the solid phase formed by the manganese oxides that have settled (and optionally the polymer residues) from the liquid phase comprising phosphoric acid. The supernatant is then recovered. It may optionally be filtered if needed.

The phosphoric acid solution thus obtained may then be mixed with an alkali metal permanganate salt to prepare a fresh etching solution. Optionally, its concentration may be adjusted before or after addition of the alkali metal permanganate salt.

The method as described above may be carried out as part of a metallization process which comprises the successive steps of:
- oxidation of the substrate with an etching solution comprising phosphoric acid and an alkali metal permanganate salt, as described above,
- activation of said oxidized substrate by contacting it with a basic aqueous solution of at least one metal salt, so as to provide metal ions onto said substrate,
- reduction of said metal ions into metal element particles, and
- electroless plating and/or electrolytic deposition of metal.

It is understood that according to the invention the used phosphoric acid in this process was obtained by the method as described above which recovers this phosphoric acid for re-use from a spent etching solution for an etching bath. The spent etching solution is obtained after using the etching solution in a metallization process as described above.

The activation step consists in depositing metal ions onto the substrate, which are able to be chelated and/or complexed by the oxygen functions created on its surface. Suitable metals comprise copper, nickel, zinc, silver, gold, platinum, palladium, iridium, rhodium and cobalt, for instance. The corresponding metal ions may be deposited from a basic aqueous solution comprising a metal salt of these metals. Suitable counter-ions for forming these salts may be tetrafluoroborate, sulfate, bromide, chloride, fluoride, iodide, nitrate or phosphate ions, for instance. Preferred metal salts are copper sulfate, copper chloride, nickel sulfate and nickel chloride. This aqueous solution has a pH above 7, preferably from 9 to 11 and still preferably from 10 to 11, which may be reached by adding a base to the aqueous solution of the metal salt, preferably ammonia. According to a preferred embodiment of this invention, this aqueous solution does not comprise any organic or inorganic chelating agent or any other organic compound. The substrate may be contacted with this aqueous solution for 30 seconds to 1 hour and usually from 1 to 5 minutes.

Reduction of the metal ions may then be performed by contacting the substrate with a basic reducing solution containing at least one reducing agent, such as sodium borohydride, hydrazine, sodium hypophosphite or dimethylaminoborane, and optionally a complexing agent and/or a pH adjusting agent. Preferably, the pH of the reducing solution ranges from 11 to 13. Reduction may be performed at a temperature of from 30 to 50°C.

This reducing solution may optionally contain a metal salt. Otherwise, the reducing step is followed by an electroless plating step which consists in contacting an aqueous solution of a metal salt with the reduced surface of the substrate. The metal salts described above may be used for this purpose. The metal layer obtained at this stage may be further thickened by electrodeposition, if needed.

The above process may optionally include a preliminary step of immersing the substrate into a solution comprising a metallization inhibitor such as a sulfur-bearing compound, preferably a thioether or a compound bearing a thiol- or thiazolyl group, more preferably mercaptobenzothiazole. Other metallization inhibitors comprise oxalic acid, a lead salt, a cadmium salt, a stain salt, a thallium salt, an aluminum salt, urea, 4-nitrobenzenediazonium tetrafluoroborate and 4-aminobenzoic acid. This is advantageous in the case where the rack that carries the substrate is made of or coated with polyvinyl chloride and the substrate comprises another material such as an ABS resin, or when the substrate comprises two different surface materials which have a different affinity for the metallization inhibitor, such as ABS areas and polycarbonate areas. The metallization inhibitor thus prevents the rack and/or some parts of the substrate from being metallized. This metallization inhibitor is preferably included in an aqueous inhibitor composition comprising an inorganic acid and having a pH from 1 to 3. This solution may additionally include a viscosifier such as a cellulose derivative.

The metallization process may also comprise intermediate steps of rinsing the substrate with water optionally mixed with a detergent and/or a base, if needed.

To achieve the present invention an apparatus can be used comprising at least a dish as one embodiment of an appropriated vessel, a heater device, a cooler device and a centrifuge for recovering the phosphoric acid according to the method as explained above and providing the recovered phosphoric acid for the process as explained above.

The heater device comprises means of a heating plate, a heater stick, a heat-transfer fluid, a gas source, a microwave heater or an infra-red heater.

The apparatus may further comprise e.g. means of dosing and mixing for preparing the etching solution used in said process.

### EXAMPLES

This invention will be better understood in light of the following examples which are given for illustrative purposes only and do not intend to limit the scope of the invention, which is defined by the attached claims.

### Example 1: Recovery of phosphoric acid from a spent etching solution

Plastic substrates were etched in an etching bath formed by mixing 700 ml of phosphoric acid (85%) with 10g/l of sodium permanganate. The bath was maintained at 40°C and used for several days. 1 L of the spent etching bath was then placed in a dish and the amount of manganese was determined by Inductively Coupled Plasma (ICP). The bath was then heated to 150°C by means of a heating plate, under stirring. Three different residence (heating) times and two different baths were tested. After cooling to room temperature, the heated bath was centrifuged (100 kG) and the supernatant was collected. The manganese content in the supernatant was determined by ICP.

The results obtained are summarized in the table below.

| Residence time (min) | [Mn] before treatment (g/L) | [Mn] after treatment (mg/L) | Residual manganese (%) |
|---|---|---|---|
| 30 | 4.2 | 640 | 15.2% |
| 45 | 4.2 | 268 | 6.4% |
| 70 | 8.8 | 116 | 1.3% |

This table demonstrates that the longer the spent bath is heated, the lower the amount of residual manganese. In any case, the phosphoric acid solution thus obtained may be used again to prepare a fresh etching solution for use in the process for metallizing.

### Example 2: Impact of the separation method

The process of Example 1 was repeated, except that several separation methods were tested, as shown in the table below.

| Method | Treatment time (1L) | Remarks |
|---|---|---|
| Filtration under vacuum (sintered glass funnels; 10-16 µm) | 4 hours | Clear liquid obtained. Filter clogging |
| Decantation (decanting tank) | 24-28 hours | Clear liquid obtained. Cumbersome |
| Batchwise centrifugation (4,000 rpm) | 5 min | Clear liquid obtained. |
| Continuous centrifugation (10,000 rpm) | approx. 1 min | Clear liquid obtained. |

It follows from this table that centrifugation is the best method for separating the manganese oxides that have settled from the phosphoric acid solution to recover, because it gives excellent separation efficiency within an industrially acceptable time frame.

## Claims

1. Method for recovering phosphoric acid from a spent phosphoric acid / alkali metal permanganate salt etching solution containing at least one manganese oxide, **characterized in that** said process comprises the following successive steps:
(a) heating the etching solution to a temperature between 90°C and 200°C so as to coalesce said at least one manganese oxide,
(b) cooling down the resulting suspension,
(c) centrifuging the cooled suspension so as to separate a liquid phase from a solid phase, and
(d) recovering said liquid phase which contains phosphoric acid.

2. The method according to claim 1, **characterized in that** the etching solution is heated to a temperature from 110 to 160°C, preferably from 130 to 150°C in step (a).

3. The method according to claim 1 or 2, **characterized in that** the alkali metal permanganate salt is sodium permanganate or potassium permanganate, preferably sodium permanganate.

4. The method according to any of claims 1 to 3, **characterized in that**, for the preparation of the etching solution, the alkali metal permanganate salt is mixed in an amount of from 1 g/l to 25 g/l, and preferably from 5 to 10 g/l, with phosphoric acid in an amount of from 5 to 20 mol/1, preferably from 8 to 14 mol/l, relative to the total volume of the etching solution.

5. The method according to any of claims 1 to 4, **characterized in that** heating in step (a) is performed by means of a heating plate, a heater stick, a heat-transfer fluid, a gas source, a microwave heater or an infra-red heater.

6. The method according to any of claims 1 to 5, **characterized in that** the phosphoric acid solution obtained in step (d) is then mixed with an alkali metal permanganate salt to prepare a fresh etching solution.

7. The method according to any of claims 1 to 6, **characterized in that** the spent etching solution comes from a process for metallizing a non-conductive substrate, comprising the successive steps of:
- oxidation of said substrate with an etching solution comprising phosphoric acid and an alkali metal permanganate salt, so as to provide an oxidized substrate and a spent etching solution,
- activation of said oxidized substrate by contacting it with a basic aqueous solution of at least one metal salt, so as to provide metal ions onto said substrate,
- reduction of said metal ions into metal elements, and
- electroless plating and optionally electrodeposition of metal.

8. A process for metallizing a non-conductive substrate, comprising the successive steps of:
- oxidation of said substrate with an etching solution comprising phosphoric acid and an alkali metal permanganate salt,
- activation of said oxidized substrate by contacting it with a basic aqueous solution of at least one metal salt, so as to provide metal ions onto said substrate,
- reduction of said metal ions into metal elements, and
- electroless plating and optionally electrodeposition of metal,
**characterized in that** in said etching solution said phosphoric acid is re-used and was recovered by the method as claimed in any of claims 1 to 6.

9. Use of an apparatus comprising at least a dish, a heater device, a cooler device and a centrifuge for recovering the phosphoric acid according to the method as claimed in any of claims 1 to 7 and providing the recovered phosphoric acid for the process as claimed in claim 8.

## Patentansprüche

1. Verfahren zur Rückgewinnung von Phosphorsäure aus einer verbrauchten Phosphorsäure-/Alkalimetallpermanganatsalzätzlösung, die mindestens ein Manganoxid enthält, **dadurch gekennzeichnet, dass** das Verfahren die folgenden aufeinanderfolgenden Schritte umfasst:
(a) Erwärmen der Ätzlösung auf eine Temperatur zwischen 90°C und 200°C zwecks Koaleszieren des mindestens einen Manganoxids,
(b) Abkühlen der entstehenden Suspension,
(c) Zentrifugieren der abgekühlten Suspension zwecks Abtrennung einer flüssigen Phase von einer festen Phase, und
(d) Zurückgewinnen der flüssigen Phase, die Phosphorsäure enthält.

2. Verfahren nach Anspruch 1, **dadurch gekennzeichnet, dass** die Ätzlösung in Schritt (a) auf eine Temperatur zwischen 110 und 160°C, vorzugsweise zwischen 130 und 150°C erwärmt wird.

3. Verfahren nach Anspruch 1 oder 2, **dadurch gekennzeichnet, dass** das Alkalimetallpermanganatsalz Natriumpermanganat oder Kaliumpermanganat, vorzugsweise Natriumpermanganat ist.

4. Verfahren nach einem der Ansprüche 1 bis 3, **dadurch gekennzeichnet, dass** zur Herstellung der Ätzlösung das Alkalimetallpermanganatsalz in einer Menge zwischen 1 g/l und 25 g/l, und vorzugsweise zwischen 5 und 10 g/l, mit Phosphorsäure in einer Menge zwischen 5 und 20 mol/l, vorzugsweise zwischen 8 und 14 mol/l, bezogen auf das Gesamtvolumen der Ätzlösung gemischt wird.

5. Verfahren nach einem der Ansprüche 1 bis 4, **dadurch gekennzeichnet, dass** die Erwärmung in Schritt (a) mit einer Heizplatte, einem Heizstab, einem Wärmeträgermedium, einer Gasquelle, einer Mikrowellenheizvorrichtung oder einer Infrarotheizvorrichtung durchgeführt wird.

6. Verfahren nach einem der Ansprüche 1 bis 5, **dadurch gekennzeichnet, dass** die in Schritt (d) erhaltene Phosphorsäurelösung anschließend zur Herstellung einer frischen Ätzlösung mit einem Alkalimetallpermanganatsalz gemischt wird.

7. Verfahren nach einem der Ansprüche 1 bis 6, **dadurch gekennzeichnet, dass** die verbrauchte Ätzlösung aus einem Verfahren zur Metallisierung eines nicht leitfähigen Substrats stammt, umfassend die aufeinanderfolgenden Schritte:
- Oxidation des Substrats mit einer Ätzlösung, umfassend Phosphorsäure und ein Alkalimetallpermanganatsalz, zwecks Bereitstellung eines oxidierten Substrats und einer verbrauchten Ätzlösung,
- Aktivierung des oxidierten Substrats durch Zusammenbringen mit einer basischen wässrigen Lösung aus mindestens einem Metallsalz, damit auf dem Substrat Metallionen vorgesehen sind,
- Reduktion der Metallionen zu elementaren Metallen, und
- stromlose Abscheidung und gegebenenfalls elektrolytische Abscheidung von Metall.

8. Verfahren zur Metallisierung eines nicht leitfähigen Substrats, umfassend die aufeinanderfolgenden Schritte:
- Oxidation des Substrats mit einer Ätzlösung, umfassend Phosphorsäure und ein Alkalimetallpermanganatsalz,
- Aktivierung des oxidierten Substrats durch Zusammenbringen mit einer basischen wässrigen Lösung aus mindestens einem Metallsalz, damit auf dem Substrat Metallionen vorgesehen sind,
- Reduktion der Metallionen zu elementaren Metallen, und
- stromlose Abscheidung und gegebenenfalls elektrolytische Abscheidung von Metall,
**dadurch gekennzeichnet, dass** in der Ätzlösung die Phosphorsäure wiederverwendet wird und mit dem Verfahren nach einem der Ansprüche 1 bis 6 zurückgewonnen wurde.

9. Verwendung einer Vorrichtung, die mindestens eine Schale, eine Heizeinrichtung, eine Kühleinrichtung und eine Zentrifuge umfasst, zur Rückgewinnung der Phosphorsäure nach dem Verfahren nach einem der Ansprüche 1 bis 7 und zur Bereitstellung der zurückgewonnenen Phosphorsäure für das Verfahren nach Anspruch 8.

## Revendications

1. Procédé de récupération d'acide phosphorique à partir d'une solution de gravure d'acide phosphorique/sel de permanganate de métal alcalin épuisée contenant au moins un oxyde de manganèse, **caractérisé en ce que** ledit procédé comprend les étapes successives suivantes :
(a) chauffage de la solution de gravure jusqu'à une température comprise entre 90 °C et 200 °C de sorte à coalescer ledit au moins un oxyde de manganèse,
(b) refroidissement de la suspension résultante,
(c) centrifugation de la suspension refroidie de sorte à séparer une phase liquide d'une phase solide, et
(d) récupération de ladite phase liquide qui contient de l'acide phosphorique.

2. Procédé selon la revendication 1, **caractérisée en ce que** la solution de gravure est chauffée jusqu'à une température comprise entre 110 et 160 °C, préférentiellement entre 130 et 150 °C dans l'étape (a) .

3. Procédé selon la revendication 1 ou 2, **caractérisé en ce que** le sel de permanganate de métal alcalin est le permanganate de sodium ou le permanganate de potassium, préférentiellement le permanganate de sodium.

4. Procédé selon l'une quelconque des revendications 1 à 3, **caractérisé en ce que**, pour la préparation de la solution de gravure, le sel de permanganate de métal alcalin est mélangé à une teneur comprise entre 1 g/l et 25 g/l, et préférentiellement entre 5 et 10 g/l, à de l'acide phosphorique à une teneur comprise entre 5 et 20 mol/l, préférentiellement entre 8 et 14 mol/l, par rapport au volume total de la solution de gravure.

5. Procédé selon l'une quelconque des revendications 1 à 4, **caractérisé en ce que** le chauffage dans l'étape (a) est mis en œuvre par le biais d'une plaque chauffante, d'une tige chauffante, d'un fluide caloporteur, d'une source de gaz, d'un dispositif de chauffage à micro-ondes ou d'un dispositif de chauffage à infrarouge.

6. Procédé selon l'une quelconque des revendications 1 à 5, **caractérisé en ce que** la solution d'acide phosphorique obtenue dans l'étape (d) est ensuite mélangée à un sel de permanganate de métal alcalin pour préparer une solution de gravure fraîche.

7. Procédé selon l'une quelconque des revendications 1 à 6, **caractérisé en ce que** la solution de gravure épuisée provient d'un processus de métallisation d'un substrat non conducteur, comprenant les étapes successives :
- oxydation dudit substrat par une solution de gravure comprenant de l'acide phosphorique et un sel de permanganate de métal alcalin, de sorte à pourvoir un substrat oxydé et une solution de gravure épuisée,
- activation dudit substrat oxydé par mise en contact avec une solution aqueuse basique d'au moins un sel métallique, de sorte à pourvoir des ions métalliques sur ledit substrat,
- réduction desdits ions métalliques en métal élémentaire, et
- placage anélectrolytique et éventuellement électrodéposition du métal.

8. Procédé de métallisation d'un substrat non conducteur, comprenant les étapes successives de :
- oxydation dudit substrat par une solution de gravure comprenant de l'acide phosphorique et un sel de permanganate de métal alcalin,
- activation dudit substrat oxydé par mise en contact avec une solution aqueuse basique d'au moins un sel métallique, de sorte à pourvoir des ions métalliques sur ledit substrat,
- réduction desdits ions métalliques en métal élémentaire, et
- placage anélectrolytique et éventuellement électrodéposition du métal,
**caractérisé en ce que** dans ladite solution de gravure, ledit acide phosphorique est réutilisé et a été récupéré par le procédé selon l'une quelconque des revendications 1 à 6.

9. Utilisation d'un appareil comprenant au moins une coupelle, un dispositif de chauffage, un dispositif de refroidissement et une centrifugeuse pour récupérer l'acide phosphorique conformément au procédé selon l'une quelconque des revendications 1 à 7 et pourvoir l'acide phosphorique récupéré pour le procédé selon la revendication 8.
